# EUROPEAN PATENT APPLICATION

(11) **EP 4 844 354 A1**
(43) Date of publication of application: **25.11.2026**
(21) Application number: 25178499.7
(22) Date of filing: 23.05.2025
(51) Int. Cl.: G01L 1/12, G01G 3/15

(54) **FORCE SENSOR UNIT WITH IMPROVED SPATIAL COVERAGE**

(71) Applicant: Melexis Technologies SA, 2022 Bevaix (CH)
(72) Inventor: LE SIGNOR, Théo, 2022 Bevaix (CH); LOMAKIN, Ievgen, 2022 Bevaix (CH); ETTELT, Dirk, 2022 Bevaix (CH); DIDDEN, Jeroen, 3980 Tessenderlo-Ham (BE)
(74) Representative: Bardehle Pagenberg Partnerschaft mbB Patentanwälte Rechtsanwälte

(57) **Abstract**

A sensor unit for measuring a force is described. The sensor unit comprises a substrate, at least one sensor being arranged on the substrate, a deformable element connected to the substrate, wherein the deformable element is deformable by a force, and at least two elements for reacting with the at least one sensor for measuring the force by a deformation of the deformable element, wherein the deformable element extends at least partially between the at least one sensor and the at least two elements, wherein a respective position of each of the at least two elements for reacting with the at least one sensor does not overlap, in a direction perpendicular to the substrate with a respective position of each of the at least one sensor on the substrate. Further, a system is described, the system comprising a plurality of the aforementioned sensor units, wherein the sensor units of the plurality of sensor units are interconnected.

## Description

### TECHNICAL FIELD

The invention of the current application relates to a force sensor unit with improved spatial coverage by using a sensor unit that is sensitive to the movement of multiple elements, e.g. magnets. Further, a system comprising a plurality of interconnected force sensor units is described.

### BACKGROUND

A force sensor returns an electronic signal proportional to the mechanical force applied to the sensor. It can also be said that a force sensor converts the magnitude of applied force into a related electronic signal. The forces measured can be mechanical quantities such as tension, pressure, weight, torque, strain, and interior stress. Force sensors have become indispensable core components of power equipment, engineering machinery, various working machines, and industrial automation systems.

Nowadays force sensors have a wide field of application from the robotics industry to the medical sector.

For example, using existing force sensors, the forces applied to workpieces during an automatized manufacturing process can be measured in real time to control the force exerted upon the workpiece. In this way, the force-load of the workpieces can be controlled, and potentially limited, during the manufacturing process. This is in particular important when the workpiece is sensible.

However, measuring a force can also be important when the stiffness of an object shall be determined, since stiffness is defined as the extent to which an object resists deformation in response to an applied force.

Often times, the force sensors are used together with multi-axis robotic devices to move, position, hold, or sense objects. A multi-axis robotic device may, for example, include a robotic finger or a gripper. A robotic finger is like a humanoid finger but can be moveable in more directions. At the tip of the finger a force sensor can be applied, which allows to sense an object. A gripper is a mechatronic device, which exerts a force and a corresponding counterforce onto an object. Thereby, the force and the counterforce press the object against respective parts of the gripper such that the object and the respective gripper parts come into contact.

In all fields of application, the workpieces, objects or tissue onto which a force is applied may be irregular in shape. Then the forces which may be exerted upon the object need to be adapted to the shape. As such, it is necessary to measure the force applied to an object over a larger surface area instead of just punctually. For some applications it may even be necessary that the used sensor can adapt to the irregular shape itself.

Force sensors devices known in the art consist of a sensor and a deformable element in which an element for reacting with the sensor is embedded. In order to be sensitive over a large area, the area needs to be covered with a plurality of force sensor devices, wherein each sensor of the plurality of force sensor devices provides a spatial data point for the force measurement. Since a sensor device having a sensor and an element for reacting with the sensor is needed for every data point, a large number of sensors is needed to cover a large spatial area.

It is an object of the present invention to reduce the number of sensors needed for covering large areas for force measurements.

### SUMMARY

The abovementioned needs are addressed by a sensor unit for measuring a force according to the invention. The invention is defined by the independent claims. Preferred embodiments are set out in the dependent claims.

The sensor unit comprises a substrate, at least one sensor arranged on the substrate, a deformable element connected to the substrate and at least two elements for reacting with the at least one sensor.

The sensor arranged on the substrate may be an integrated circuit, a semiconductor die, a bare die, an unpackaged chip, or unpackaged integrated circuit. The sensor may be enclosed by the deformable element that may thereby provide passivation and encapsulation of the sensor, which avoids a need for using any lead frame or overmolding of the sensor, thereby improving flexibility.

The sensor may be a Hall sensor and may be a multipixel sensor. A multipixel sensor is a sensor comprising more than one sensing element. These multiple sensing elements may be located on the same semiconductor die. Further, these multiple sensing elements may be sensitive to more than one magnetic field component. Using a multipixel sensor enables stray-field immune calculations. Alternatively, other types of sensor elements may be used, for example giant magnetoresistance (GMR) sensors or tunnel magnetoresistance (TMR) sensors may be used, which may also be multipixel sensors.

The element for reacting with the sensor may consist of a single element or a plurality of elements. The plurality of elements may comprise similarly shaped and/or similarly sized elements or differently shaped and sized elements.

The deformable element may be deformable and may extend at least partially between the sensor and the element. Thereby, the deformable element may also comprise pockets which form a kind of free space, into which no material of the deformable element extends. This free space may be filled with air, the surrounding media or an inert gas. The pockets still form part of the deformable element, such that the deformable element still extends between the element and the sensor, even if free space is between the element and the sensor. In such an arrangement, it can also be said that the element and/or the sensor may partially or fully extent into the free space of the deformable element. It can also be said that the element is partially embedded or attached to a wall of the formed pocket.

An element is deformable when it undergoes a change of shape and/or volume, when an external force acts onto the element. Preferably, deformable means that the deformable element undergoes an elastic deformation, i.e. it returns to its original shape and/or volume once the external force does no longer act upon the element. The deformable element may be an elastic element and may comprise an elastomer. In some cases, the elastomer may be a biocompatible elastomer, which allows the sensor unit to be used in medical applications. In some cases, the deformable element may form pockets into which the deformable element may extend when it is deformed by the external force. For example, when an external force causes a substantial deformation of the deformable element, a portion of the deformable element may be displaced by the force and can extend into one of the pockets. Thereby, a pocket is a hollow space into which material of the deformable element can extend when being deformed. The formation of pockets has not only the advantage of allowing the deformable element to extend therein, but also can be used to give some stability to the deformable element.

Furthermore, the deformable element provides both the ability for the element to move to a certain extent and change its position when a force is applied, but also can encapsulate and possible electrically isolate the sensor, respectively the sensor chip, such that no packaging of the sensor chip is necessary, which makes it possible to have a very thin sensor unit, which is also in itself flexible. A further advantage is that the sensor chips of the different sensor units can be arranged closer to one other as there is no package around each chip, which inherently increases the spatial resolution of the sensor units.

During operation, an object exerts a force onto the sensor units. Technically, the case that the sensor units is pressed against an object such that the sensor units exerts a force on the object is also encompassed, but in this disclosure it will not be distinguished between both cases since in both cases the force is amount wise the same, but is only directed in two opposing directions. Thereby, either the element for reacting with the sensor or the deformable element can come into contact with the object. The contact can be direct or indirect. The element for reacting with the sensor or the deformable element may as such be in direct or indirect contact with the object. In case of a direct contact, at least one surface of the element for reacting with the sensor or the deformable element touches at least one surface of the object. In case of an indirect contact, at least some other part is in between the contact surfaces. For the element for reacting with the sensor, this may be the deformable element itself, such that the element for reacting with the sensor is in indirect contact with the object, but the deformable element is in direct contact. In this case it can also be said that the element for reacting with the sensor is embedded in the deformable element. Thereby, the element for reacting with the sensor may be partially or fully embedded in the deformable element. In the latter case, all surfaces of the element for reacting with the sensor are in contact with the deformable element. It can also be said that the material of the deformable element surrounds the element for reacting with the sensor. The other way around, if the deformable element is in indirect contact with the object, the element for reacting with the sensor may be in direct contact with the object. It is however also encompassed that other pieces are in direct contact with the object, whereas the element for reacting with the sensor as well as the deformable element are only in indirect contact with the object. For example, the element for reacting with the sensor may be embedded in a piece of plastic, which is contacting the deformable element. In another example, the piece of plastic is still contacting the deformable element and the object, but the element for reacting with the sensor is embedded in the deformable element, or the element is contacting the deformable element and the piece of plastic. In all three cases, the object will directly contact the piece of plastic but neither the element for reacting with the sensor nor the deformable element directly.

Since the deformable element extends at least partially between the sensor and the element or even surrounds the element, it holds the element in a particular position with respect to the sensor. This position may be defined as a first position of the element with respect to the sensor. It can also be said that the deformable element holds the element in a particular distance from the sensor. If the deformable element is deformed, the element as such performs a coaligned movement in the direction of deformation of the deformable element. If the deformation is a compression, then the distance of the element to the sensor is decreased, whereas if the deformation is a tension, then the distance is increased.

Deformation of the deformable element means that at least one spatial extension of the deformable element is changed in at least one respective spatial dimension. As such, the deformable element of the sensor arrangement may be soft in the sense that is it deformable. The deformability and in particular how much the deformable element can be deformed depends upon the material used for the deformable element. For example, the deformable element can be made of a flexible material. A flexible material is a material which returns to its initial shape once the external force is released. Hence, the deformable element may return to its initial shape if any external force is released. Therefore, the deformable element may also be called a flexible element or an elastic element. In another example, the deformable element may be an elastomer. An elastomer is typically made of monomers linked by weak intermolecular forces. Due to the weak intermolecular forces of the chemical elements of the elastomer, conformational changes of the compounds are possible without or with only partially breaking covalent bonds. This results in that an elastomer may be both viscous and elastic at the same time. Therefore, an elastomer may be deformed by an external force.

The deformation of the deformable element causes the element for reacting with the sensor to move to a second position different to the first position. If the deformable element is compressed, then the second position of the element is closer to the sensor than the first position of the element. If a tension force is applied, then the second position of the element is further away from the sensor than the first position. The change of position can be detected by the sensor of the sensor arrangement by reacting with the element. When reacting with the sensor, the element influences the measurement of the sensor. It could also be said that the element couples with the sensor through a physical effect, which is characteristic of the sensor and the element. This coupling of the element with the sensor depends on the position of the element with respect to the sensor. It could also be said that through the position-dependent coupling, the measurement of the sensor is a unique function of the position of the element with respect to the sensor. In this sense it can be said that the sensor as used in the sensor units is a distance measuring sensor. Such a sensor returns an electronic signal proportional to the position of the element with respect to the sensor.

If no external force is applied to the sensor unit, the deformable element is not deformed and the element is located at the first position with respect to the sensor. Hence, a first signal can be measured by the sensor, which corresponds to a zero-force measurement. If a finite external force is applied to the element, the deformable element is deformed, and the element moves to the second position different from the first position. This second position of the element with respect to the sensor leads to a second signal of the sensor, which corresponds to the applied external force. Hence, the spatial difference between the first and the second position can uniquely be mapped to the respective applied external forces. The spatial difference encompasses any axial and/or rotational differences between the two positions. The spatial difference can also be referred to as displacement of the element. The mapping can be done using a non-linear model, since the force may not be proportional to the displacement of the element but follow a non-linear function. Since a change of the interaction of the element with the sensor can be measured with high accuracy, a high accuracy measurement, derivation, calculation, or estimation of the applied force can be undertaken. In other words, an alteration of the influence of the element on the sensor allows to infer the external stimulus leading to the alteration, namely the applied external force. For example, as described above, the sensor may be sensitive to the displacement of the element with respect to the sensor.

A sensor unit may use a magnetic field for measuring changes in the position of the element for reacting with the sensor. The magnetic field may be a magnetic field caused by a permanent magnet (e.g. the element for reacting with the sensor may be a permanent magnet) or it may be a magnetic field that is induced by changes of an electrical field (e.g. the sensor may generate a magnetic field that couples with the element for reacting with the sensor (e.g. by generating of eddy currents in said element)).

According to the invention, a respective position of each of the at least two elements for reacting with the at least one sensor does not overlap, in a direction perpendicular to the substrate, with a respective position of each of the at least one sensor on the substrate. In other words, the at least one sensor and the at least two elements for reacting with the sensor are not stacked on top of each other. Instead, the at least two elements for reacting with the sensor are arranged next to each other with the sensor in between them. It can also be said that, when a projection of the components of the sensor unit into a plane parallel to the substrate is considered, a space is formed between the at least two elements for reacting with the at least one sensor and the at least one sensor is located within this space. Hereinafter, when it is described that objects are placed next to each other or an object is placed between two or more other objects, a projection of the locations of the objects into a plane parallel to the substrate of the sensor unit is considered, unless it is explicitly described otherwise.

This way, a single sensor is sensitive to measure the changes in the position of the at least two elements for reacting with the sensor when a force is applied to the deformable element. For example, the sensor unit can be calibrated by comparing the output signal of the sensor, i.e. a signal indicative of the magnetic field the sensor experiences, in case that no force is applied, to the output signal of the sensor in case that a force is applied to at least one of the elements for reacting with the sensor. As a result, the sensor unit may output a force calculated from the measurements of the at least one sensor.

Furthermore, the sensor unit may also be capable of measuring a location where the force is applied, because the at least one sensor of the sensor unit is sensitive to motion of multiple elements for reacting with the sensor, thus enabling the sensor unit to reconstruct where the force was applied based on how the individual elements for reacting with the sensor respond to the applied force. In some examples, the sensor unit may determine a location of the applied force in a coordinate system, while in other examples, areas on the surface of the deformable element may be predefined (e.g. based on the locations of the elements for reacting with the sensor) and the area responding the most to the applied force may be indicated. Hence, the sensor unit may output data in the form of (*x, y, F*), with (*x*, *y*) being the in-plane coordinates of a two-dimensional coordinate system with the plane corresponding to the surface of the substrate and *F* being the calculated force. In other examples, the sensor may output data in form of (*L, F*) with *L* being a predefined location and *F* being the calculated force.

In a simple example, a single sensor is placed between two elements for reacting with the sensor and thereby is sensitive to two elements for reacting with the sensor. In another example, more elements for reacting with the sensor are used, e.g. three elements arranged in a triangle and the sensor being located in the inside of the triangle. In another example, more sensors may be used, e.g. arranging four elements for reacting with the sensors in a quadrilateral and two sensors being located in the inside of the quadrilateral. Some specific embodiment examples will be described with reference to the drawings, but the skilled person will appreciate that these specific embodiment examples of the arrangement of sensors and elements for reacting with the sensors of the sensor unit will not limit the scope of the disclosure.

As the skilled person will appreciate, each sensor of the sensor unit according to the invention has an enhanced coverage area because of the arrangement of two or more elements for reacting with the sensor in a non-overlapping manner with respect to the position of the sensor. Hence, due to a single sensor being sensitive to the motion of multiple elements for reacting with the sensor, a larger area can be covered with a smaller number of sensors, thus saving resources and reducing the amount of signals provided by the sensors for calculation of the location where a force is applied.

In the following preferred embodiments are described.

In some preferred embodiments, the at least two elements for reacting with the at least one sensor for measuring a force are embedded into the deformable element.

Preferably, the at least two elements for reacting with the at least one sensor for measuring a force are magnetic elements. In some embodiments, the at least two magnetic elements for reacting with the at least one sensor have the same polarities. Throughout this disclosure, two magnets are described to have the same polarities when they are arranged in a manner that their polarities correspond. An example of magnetic elements having the same polarities is a two-pole magnet, wherein both two-pole magnets are arranged to have a polarity in a direction perpendicular to the substrate, for example the south pole facing the substrate and north pole facing away from the substrate. Alternatively, the two-pole magnets may have a polarity in a direction parallel to substrate, for example, the north pole being located on a first side (e.g. right) and south pole on the opposing side (e.g. left). The skilled person will be aware that these examples of two-pole magnets are presented for illustrative purposes. The principle of using magnets with the same polarities may also be applied to multi-pole magnets. In this case, the multi-pole magnets would be arranged without phase shift relative to one another.

In other preferred embodiments, the at least two magnetic elements for reacting with the at least one sensor may have different polarities. Again an example of magnetic elements having different polarities is a two-pole magnet, wherein in a direction perpendicular to the substrate, for example the south pole of first magnet facing the substrate and the north pole of first magnet facing away from the substrate, while the second magnet is arranged in the opposite manner, i.e. north pole facing towards the substrate and south pole facing away from the substrate. Alternatively, the two-pole magnets may have a polarity in a direction parallel to substrate, for example, the north pole being located on a first side (e.g. right) and south pole on the opposing side (e.g. left) for the first magnet and vice versa for the second magnet. In case of a two-pole magnet, it may also be said that the magnetic elements have opposing polarities. Again, the skilled person will be aware that these examples of two-pole magnets are presented for illustrative purposes. The principle of using magnets with the different polarities may also be applied to multi-pole magnets. In this case, the multi-pole magnets would be arranged with particular phase shifts relative to one another.

In some preferred embodiments, the magnetic elements may be formed by magnetic powder. The magnetic powder may be embedded in the deformable element or may be embedded in a matrix material. In the latter case, the deformable element may comprise voids in which the matrix material with embedded magnetic powder is located. This facilitates the use of magnetic powder while still placing the magnetic elements at localized positions relative to each other and towards the at least one sensor.

In some preferred embodiments, the at least one sensor may comprise two or more sensing elements arranged in a line, wherein the line preferably extends between two of the at least two elements for reacting with the sensor. More preferably, the at least one senor may comprise three sensing elements. Using three sensing elements allows to gather more information about the motion of the magnetic elements and may enable the reconstruction of the direction in which the magnet is moved. Using three sensing elements allows for stray-field immune measurement of the movement of the elements for reacting with the sensor. The skilled person will appreciate that the three sensing elements do not need to form a perfect line and their positions may essentially be located along a line. Further, similar effects may be achieved with a higher number of sensing elements, which may be arranged in a line or in a two-dimensional manner.

In some preferred embodiments, the at least one sensor may be two sensors, wherein each of the at least two sensors may comprise three or more sensing elements that are spaced apart from one another. The three or more sensing elements may be arranged in a spatial manner. For example, three sensing elements may be arranged in a manner that their respective locations form the tips of a triangle or, in other embodiments, a line. In another example, four sensing elements may be arranged in a manner that their respective locations form the corners of a rectangle.

In some preferred embodiments, the at least two elements for reacting with the at least one sensor are spaced apart from one another and form a space between them. Generally, the at least one sensor may be arranged in the space formed by the at least two elements for reacting with the at least one sensor. In a preferred embodiment, the at least two elements for reacting with the at least one sensor are four elements for reacting with the at least one sensor. The locations of said four elements preferably form corners of a quadrilateral, preferably a square, a rectangle, or a rhomb. Preferably, in the space formed between the corners of the quadrilateral, two sensor elements are located. More preferred, each of the two sensors may located in a space defined by three of the corners of the quadrilateral.

Further, the sensor unit may comprise an additional element for reacting with the sensor, which is located within the space formed between the at least two elements for reacting with the at least one sensor.

In some preferred embodiments, the substrate may be flexible. Using a flexible substrate allows to configure the sensor units to arbitrarily shaped surfaces, which may be of particular importance when multiple sensor units are arranged over a large, irregular area.

In some preferred embodiments, the substrate may comprise at least one terminal, the at least one terminal being configured for being connected to at least one of another sensor unit, a bus system, or a controller. The other sensor unit may be a sensor unit of same type or similar type from among the sensor units described in this disclosure.

Further, in some embodiments, aspects of the abovementioned preferred embodiments may be combined with one another.

The abovementioned need is also fulfilled by a system comprising a plurality of sensor units according to any of the aforementioned embodiment examples, wherein the sensor units of the plurality of sensor units are interconnected. As is used herein, a plurality represents any number of sensor units, starting with two sensor units.

The interconnection may be made by using terminals on each of the substrates of the sensor units. Interconnecting the plurality of sensor units enables direct signaling contact between the sensor units of the plurality of sensor units without a need for relying on additional wiring or external components that provide for the signaling. Moreover, particular signal pathways for the signaling of the sensor data may be provided via the plurality of sensor units.

In some preferred embodiments, the substrate of each of the sensor units of the plurality of sensor units may have a rectangular shape and wherein the at least one terminal of the substrate may be at least two terminals, at least one first terminal of said terminals being located at a first edge of the rectangular shaped substrate and at least one second terminal of said terminals being located at a second edge of the rectangular shaped substrate, and wherein the plurality of sensor units may be arranged in a rectangular lattice. Further, each sensor unit of the plurality of sensor units may be interconnected with at least one adjacent sensor unit of the plurality of sensor units via their first or second terminals.

In another preferred embodiment, the substrate of each of the sensor units of the plurality of sensor units may have a hexagonal shape and wherein the at least one terminal of the substrate may be at least two terminals, at least one first terminal of said terminals being located at a first edge of the hexagonal shaped substrate and at least one second terminal of said terminals being located at a second edge of the hexagonal shaped substrate, and wherein the plurality of sensor units may be arranged in a hexagonal lattice. Further, each sensor unit of the plurality of sensor units may be interconnected with at least one adjacent sensor unit of the plurality of sensor units via their first or second terminals.

Further, at least one of the terminals of at least one sensor unit of the plurality of sensor units of the aforementioned described systems may configured to be connected to a controller. The connection may be made via a bus system.

### BRIEF DESCRIPTION OF THE DRAWINGS

The following description and the annexed figures set forth in detail certain illustrative aspects of the sensor unit described above. These aspects are indicative, however, of but a few of the various ways in which the principles of various embodiments can be employed and the described embodiments are intended to include all such aspects and their equivalent.

In the figures, like reference characters generally refer to the same parts throughout the different figures. The figures are not necessarily to scale. Instead, a general focus is put on an explanation of the universal principles of the invention.

In the following description, various embodiments of the invention are described with reference to the following figures:
- FIG. 1: shows a section view of an embodiment example of a soft sensor element according to the prior art; in the status that is depicted in the figure, no external force is applied to the soft sensor element;
- FIG. 2: shows the section view of the soft sensor element of FIG. 1 with a linear external force applied;
- FIG. 3: shows the section view of the soft sensor element of FIG. 1 with a non-linear external force applied;
- FIG. 4: shows an embodiment example of a sensor unit according to the invention, wherein (a) shows a top view of the sensor unit and (b) a side view of the sensor unit;
- FIG. 5: shows an embodiment example of another sensor unit according to the invention, wherein (a) shows a top view of the sensor unit and (b) a side view of the sensor unit;
- FIG. 6: shows an embodiment example of another sensor unit according to the invention, wherein (a) shows a top view of the sensor unit and (b) a side view of the sensor unit;
- FIG. 7: shows an embodiment example of another sensor unit according to the invention, wherein (a) shows a top view of the sensor unit and (b) a side view of the sensor unit;
- FIG. 8: shows the application of the force to a sensor unit according to the invention in combination with the embodiment example of Figure 4, wherein (a) shows the same side view of the sensor unit as in Figure 4 (b), (b) shows the side view of the sensor unit with an applied force, (c) shows the magnetic field strength of the magnets as calculated from the signal output of the sensor unit, and (d) shows a compensated calculation of the magnetic field strength;
- FIG. 9: shows the application of the force to another sensor unit according to the invention, wherein (a) shows the side view of the sensor unit with an applied force in a first example, (b) shows the side view of the sensor unit with an applied force in a second example, and (c) shows the displacement of the magnets as calculated from the signal output of the sensor unit;
- FIG. 10: shows an embodiment example of another sensor unit according to the invention, wherein (a) shows a top view of the sensor unit and (b) a side view of the sensor unit;
- FIG. 11: shows an embodiment example of another sensor unit according to the invention, wherein (a) shows a top view of the sensor unit and (b) a side view of the sensor unit;
- FIG. 12: shows the embodiment example of the sensor unit of Figure 10 with different examples of terminals;
- FIG. 13: shows a system having a plurality of sensor units being interconnected in a spatial arrangement, wherein the sensor units of the plurality of sensor units correspond to the embodiment example illustrated in Figure 12 (a);
- FIG. 14: shows a system having a plurality of sensor units being interconnected in a spatial arrangement, wherein the sensor units of the plurality of sensor units correspond to the embodiment example illustrated in Figure 12 (b);
- FIG. 15: shows a system having a plurality of sensor units being interconnected in a spatial arrangement, wherein the sensor units of the plurality of sensor units correspond to the embodiment example illustrated in Figure 12 (c);
- FIG. 16: shows exemplary signal paths through the systems of sensor units illustrated in Figure 15, wherein (a) shows exemplary signal paths through the system of Figure 13, (b) shows exemplary signal paths through the system of Figure 14, (c) shows exemplary signal paths through the system of Figure 15;
- FIG. 17: shows the embodiment example of Figure 12 (a) with a terminal configured for connection with an outside component.

### DETAILED DESCRIPTION

The following detailed description refers to the accompanying figures that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

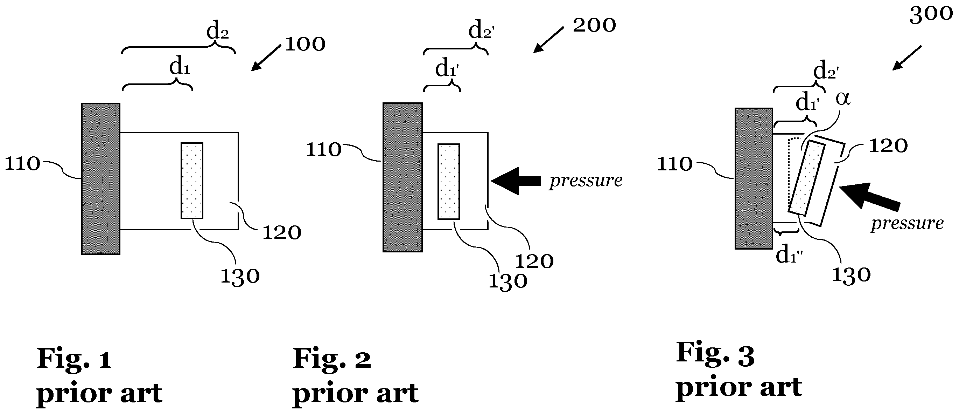

Figure 1 depicts a section view of a soft sensor element 100 according to an embodiment example of the invention. The soft sensor element 100 comprises a sensor 110, a deformable element 120, and an element 130 for reacting with the sensor 110. For example, the deformable element 120 may comprise at least one of an elastomer, a polymer, a rubber and a vulcanizate. The deformable element 120 may also comprise a flexible element, an elastic element or a flexible structure. The flexible element or the flexible structure may be made of metal. For example, the flexible element or the flexible structure may be a made of metallic flexible beams.

In the here shown embodiment example, the element 130 is fully embedded in the deformable element 120. Fully embedded means that the deformable element 120 is completely surrounding the element 130, which means all surfaces of the element 130 are in contact with the deformable element 120. It can also be said that the element 130 is enveloped by the material of the deformable element 120. The deformable element 120 is deformable by applying an external force. The applied external force may cause the deformable element 120 to be compressed such that the distance between the element 130 and the sensor 110 changes. This change in distance can be detected by the sensor 110. For example, if the element 130 is a magnet and the sensor 110 is a magnetic sensor, then the reduction in distance between the element 130 and the sensor 110 causes the sensor to detect a different magnetic field, e.g. a different magnetic field strength and/or orientation as compared to before the deformation. Hence, from a change in the measured physical unit, it can be deducted how much the deformable element 120 is deformed. The person skilled in the art will however notice that also other types of sensor 110/element 130 combinations can be used for measuring the amount of distance the deformable element 120 has been compressed.

Each individual deformation of the deformable element 120 corresponds to a different applied external force, which in turn is associated with a respective physical measurement obtained by the sensor 110. Hence, a correlation between applied external force values and corresponding measurement values of the sensor 110 exists. This correlation can be determined during an initial calibration step of the sensor 110 or can be predetermined by knowing the bulk modulus and/or a shear modulus of the deformable element 120. The correlation itself can, for instance, be established as a look-up table including external force values and their associated sensor readings. The correlation between applied external force values and corresponding measurement values of the sensor 110 could be established using a model trained by machine learning. A person skilled in the art also knows other ways to establish the respective correlations, all of which are encompassed hereby. Once an actual measurement of the sensor 110 is obtained, the look-up table can be used to infer an estimate for the external force. However, by knowing the bulk modulus and/or the shear modulus of the deformable element 120 also an algorithm can be used, which outputs the actual force applied in respect to the amount of deformation by ease of calculation. The algorithm may be a non-linear model, which defines the actual force as a non-linear function of the measurement values of the sensor 110. The algorithm or the correlation may be implemented inside an integrated circuit (IC) containing the sensor 110, or outside the integrated circuit containing the sensor 110, or partially inside the integrated circuit containing the sensor 110 (e.g. for calculating the position of the element 130 from the sensor signal), and partially outside the integrated circuit containing the sensor 110 (e.g. for inferring the force from the displacement of the element 130). The sensor 110 may be configured to provide dual sensing, which allows detection of linear forces as well as shear forces, for example a linear force in the direction of the external force and shear forces in one direction or two orthogonal directions in the plane perpendicular to the direction of the external force. The correlation or the algorithm may provide a direct link between the applied external force values and the measurement values of the sensor 110. Optionally, the correlation or the algorithm may compute the displacement of the element 130 as an intermediate step. In this case, a first correlation or a first algorithm determines the position of the element 130 from the measurement values of the sensor 110, and a second correlation or a second algorithm determines the applied external force value from the position of the element 130. Thus, in this case, the determining the position of the element 130 acts as an intermediate step.

The element 130 embedded within the deformable element 120 has in the here shown embodiment example a distance, d₁, from the sensor 110, which is smaller than the distance, d₂, of the second end of the deformable element 120 from the sensor 110.

In a not limiting sense, the distance, d₁, of the element 130 from the sensor 110 may be 3mm, the distance, d₂, of the second end of the deformable element 120 from the sensor may be 4mm A person skilled in the art knows that these dimensions are only named for illustrative purposes and shall not be understood to be limiting if not explicitly mentioned.

Figure 2 shows a section view of the soft sensor element 200 of Figure 1 with an applied external force ('*pressure*'). The applied external force can be uniform, i.e., constant over a surface of application of the force. However, the applied external force can also be non-uniform, i.e., varying over the surface of application of the force. This variation of the force over the surface of application may be linear or non-linear. In other words, each point on the surface of application of the force may be assigned a different force value, which is related to the neighboring force values according to a linear or a non-linear relationship. In the shown example, the external force is uniform over the surface of the deformable element 120 and applied perpendicularly to the surface of the sensor 110. The applied external force compresses the deformable element 120. This causes the distance, d₂, of the second end of the deformable element with respect to the sensor 110 to be reduced to a shorter distance, d_{2'}. Due to the fact that the element 130 is embedded in the deformable element 120 also the distance, d₁, of the element 130 to the sensor 110 is reduced to a shorter distance, d₁.

The sensor 110 is configured to detect the change of distance, d₁ to d_{1'}, by reacting with the element 130. If the sensor 110 is a magnetic sensor and the element 130 is a magnet, then the lower distance between the sensor 110 and the element 130 causes the sensor 110 to detect a higher magnetic field strength, since it is proportional to the distance. The change in magnetic field strength as such allows to conclude the force applied to the deformable element 120. In some cases, if the sensor 110 is a magnetic sensor, it is possible that the sensor 110 detects, additionally or alternatively to the magnetic field strength, a change of orientation of the magnetic field strength vector, i.e., of one or more angles assigned to the magnetic field vector. In this case, the magnetic sensor may be located at an offset with respect to the axis of the magnet. Whereas here only a one-dimensional distance measurement and as such a perpendicularly applied force is described, the person skilled in the art will notice that the element 130 may also be inclined at an angle as shown in Figure 2b.

In Figure 3, the external force ('*pressure*') is applied uniformly but not perpendicular to the surface of the sensor 110. Hence, the applied external force deforms the deformable element 120 in a direction not perpendicular to the surface of the sensor 110. This causes the distance, d₁, of the element 130 to the sensor 110 to be changed in a non-homogeneous way. For example, the upper end of the element 130 is moved to a larger distance, d₁, but the lower end of the element 130 is moved to a lower distance, d_{1"}. Since the distances d_{1'} and d_{1"} are different if a non-linear force is applied, the element 130 is tilted by a non-zero angle α with respect to the sensor 110. Thus, with a non-perpendicular external force the element 130 is not only translated, but also rotated. The sensor 110 is adapted to detect the change of the angle α by the reaction with the element 130. If the sensor 110 is a magnetic sensor and the element 130 is a magnet, the different angle α between the sensor 110 and the element 130 causes the sensor 110 to detect a different magnetic field, since the orientation of the magnetic field lines of the magnet 130 has been changed with respect to the sensor 110. It could also be said that the rotation of the element 130 by the angle α causes the sensor 110 to perceive a rotated three-dimensional magnetic field from the element 130. Under rotations, the absolute magnetic field strength does not change but the orientation of the magnetic field vector in space is changed. Hence, the sensor 110 perceives different magnetic fluxes as compared to no rotation of the element 130, since the projections of the magnetic field vector onto the surfaces, over which the sensor 110 measures the magnetic fluxes, are different. The change in the measured magnetic fluxes allows to infer the change of the position of the element 130. The positional change of the element 130 is uniquely linked to the force exerted onto the deformable element 120. Hence, if a non-perpendicular force is applied to the deformable element 120, a rotation of the element 130 could be used to determine the force applied to the deformable element 120.

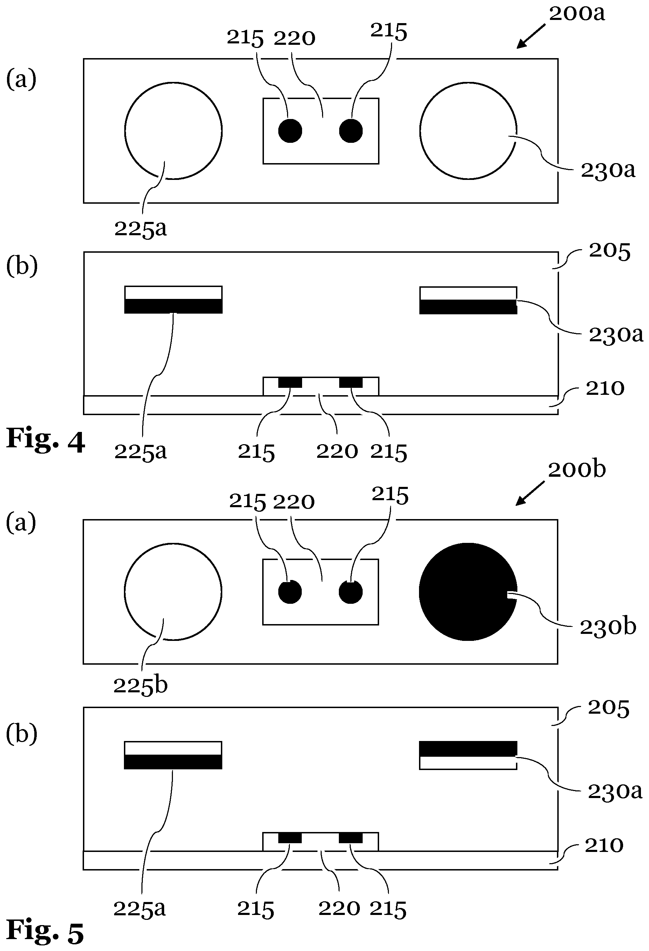

Figure 4 shows an embodiment example of a sensor unit according to the invention, wherein (a) shows a top view of the sensor unit and (b) a side view of the sensor unit.

In figure 4, the sensor unit is generally shown at 200a. The embodiment example of the sensor unit 200a depicted in figures 4 (a) and (b) comprises a substrate 210, a sensor 220, a deformable element 205 and two elements 225a, 230a for reacting with the sensor 220. The sensor 220 is attached to the substrate 210 and the deformable element 205 is attached to the substrate 210, thereby also encompassing a portion of the sensor 220. The two elements 225a, 230a for reacting with the sensor 220 are embedded in the deformable element 205.

In the embodiment example of sensor unit 200a, the sensor 220 comprises two sensing elements 215. In this embodiment example, the sensing elements 215 are arranged on the same die. The sensing elements may be sensitive to one or more magnetic field components. The sensing elements 215 in this embodiment example may be Hall elements.

In the depicted embodiment example, the elements 225a, 230a for reacting with the sensor 220 are magnetic elements. In the cross-sectional side view of figure 4 (b) this is illustrated by the two portions indicated in black and white that form the elements 225a, 230a. These portions illustrate the poles of a two-pole magnetic element, wherein without loss of generality, the black portion may be the south pole and the white portion may be the north pole. As is illustrated in figure 4, the elements 225a, 230a have the same polarities, i.e. the same orientation of their respective magnetic poles. The magnetic poles of the elements 225a, 230a generate a magnetic field. If at least one of the magnetic elements is moved - e.g. pushed downwards in direction towards the substrate 210 - the magnetic field lines of the magnetic field generated by the magnetic element are altered relatively to the sensor 220. In consequence, the sensing elements 215 of the sensor 220 will experience a difference in the magnetic field they measure. It can also be said, the magnetic field which acts upon the sensor 220 changes.

The elements 225a, 230a for reacting with the sensor 220 are spaced apart from one another, thereby forming a space between them. In this space, the sensor 220 is positioned. In other words, the sensor 220 is positioned between the two elements 225a, 230a for reacting with the sensor 220. This arrangement allows the sensor unit to be sensitive to the motion of either of the two elements 225a, 230a for reacting with the sensor 220. Furthermore, when magnetic elements 225a, 230a are used, the sensing elements 215 will experience different changes in the magnetic field lines depending on whether element 225a or element 230a is pushed towards the substrate 210. This way, it is not only possible to determine which element 225a, 230a was moved, but also to determine the location where the force was applied to the surface of the deformable element. As such, the sensor unit may be configured to output the determined location and the calculated force.

While the elements 225a, 230a are embedded in the deformable element 205 in a manner that they are fully enclosed by the deformable element 205, the elements 225a, 230a may, in some embodiments, be placed on top of the deformable element 205 or may only be partially embedded, e.g. in a manner that the top surface of the elements 225a, 230a is leveled with the surface of the deformable element 205.

Figure 5 shows an embodiment example of another sensor unit according to the invention, wherein (a) shows a top view of the sensor unit and (b) a side view of the sensor unit.

The embodiment example of the sensor unit 200b depicted in figure 5 is similar to the embodiment example of sensor unit 200a depicted in figure 4. In the following, only the differences will be described.

While in the embodiment example of sensor unit 200a both elements 225a, 230a for reacting with the sensor 220 have the same polarity, the elements 225b, 230b for reacting with the sensor 220 of the embodiment example of sensor unit 200b have different polarities. In figure 5, this is illustrated by the black and white portions of element 230b being arranged in opposite manner for elements 225b and 230b.

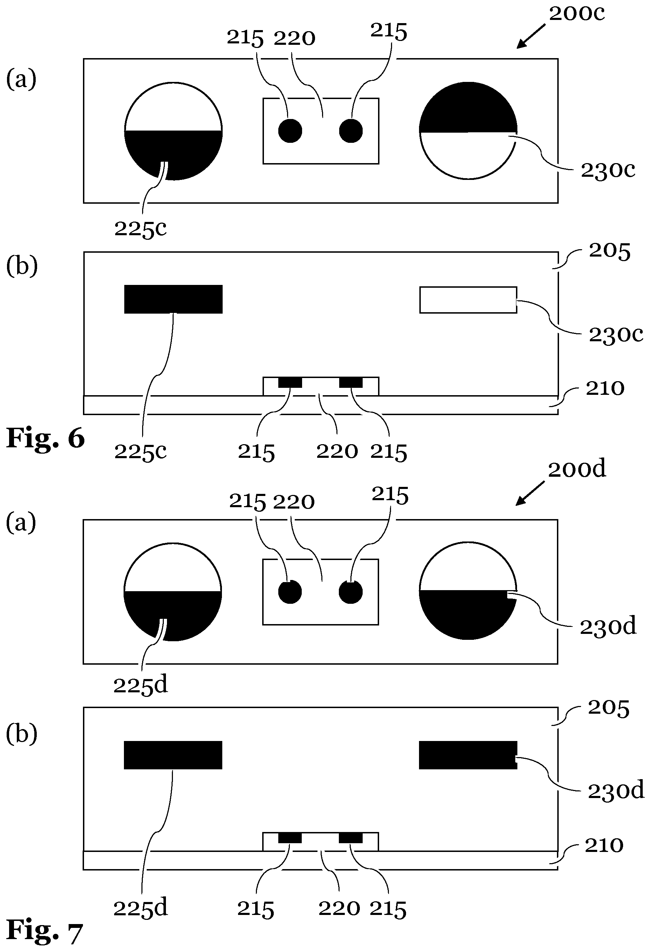

Figure 6 shows an embodiment example of another sensor unit according to the invention, wherein (a) shows a top view of the sensor unit and (b) a side view of the sensor unit.

The embodiment example of the sensor unit 200c depicted in figure 6 is similar to the embodiment examples of sensor units 200a, 200b depicted in figures 4, 5. In the following, only the differences will be described.

While in the embodiment examples of sensor units 200a, 200b both elements 225a, 230a, 225b, 230b for reacting with the sensor 220 are two-pole magnetic elements having their poles oriented in a direction perpendicular to the surface defined by the substrate 210, the elements 225c, 230c for reacting with the sensor 220 of the embodiment example of sensor unit 200c are two-pole magnets having their polarities oriented in a direction parallel to the surface defined by the substrate 210. In figure 6, this is illustrated by the black and white portions, which indicate the different poles of the magnetic element.

Figure 7 shows an embodiment example of another sensor unit according to the invention, wherein (a) shows a top view of the sensor unit and (b) a side view of the sensor unit.

The embodiment example of the sensor unit 200d depicted in figure 7 is similar to the embodiment examples of sensor units 200a, 200b, 200c depicted in figures 4, 5, 6. In the following, only the differences will be described.

While in the embodiment examples of sensor units 200a, 200b both elements 225a, 230a, 225b, 230b for reacting with the sensor 220 are two-pole magnetic elements having their poles oriented in a direction perpendicular to the surface defined by the substrate 210, the elements 225d, 230d for reacting with the sensor 220 of the embodiment example of sensor unit 200d are two-pole magnets having their polarities oriented in a direction parallel to the surface defined by the substrate 210, similarly to elements 225c, 230c of sensor unit 200c depicted in figure 6. In figure 7, this is again illustrated by the black and white portions, which indicate the different poles of the magnetic element.

The embodiment examples of the sensor units depicted in figures 4 to 7 show different examples of elements 225a-d, 230a-d for reacting with the sensor 220, in particular with regards to polarities of two-pole magnetic elements. The skilled person will be aware that these examples are presented for illustrative purposes only and other elements for reacting with the sensor may be used. In particular, alternatives to two-pole magnets may be used, including multi-pole magnets or non-magnetic elements, such as for example inductive elements that may rely on the sensor 220 being configured to generate a magnetic field that induces an eddy current in the inductive elements, which then generate an inductive magnetic field, which can be registered by the sensor 220 when at least one of the inductive elements is pushed towards the substrate 210. Which types of elements for reacting with the sensor are used may depend on the field of application and the spatial configuration of the sensor unit.

Further, the skilled person is aware that the force applied to the deformable element and/or the elements for reacting with the sensor is not limited towards forces causing a compression of the deformable element but encompass also forces causing an expansion (e.g. by tension).

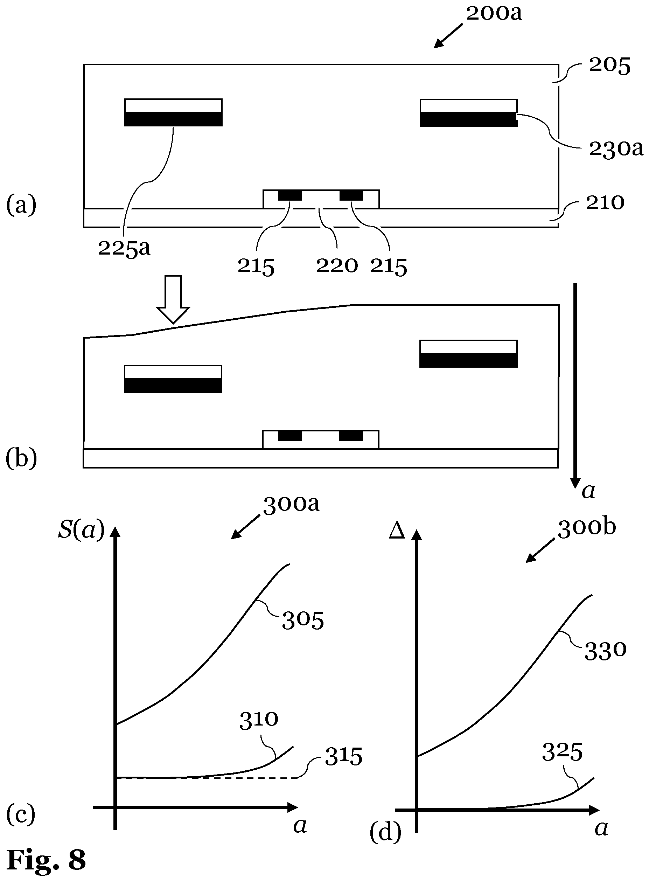

Figure 8 shows the application of the force to a sensor unit according to the invention in combination with the embodiment example of Figure 4, wherein (a) shows the same side view of the sensor unit as in Figure 4 (b), (b) shows the side view of the sensor unit with an applied force, (c) shows the magnetic field strength of the magnets as calculated from the signal output of the sensor unit, and (d) shows a compensated calculation of the magnetic field strength.

Figure 8 (a) shows an embodiment example of a sensor unit 200a according to the invention in a cross-sectional view, which is the same as the embodiment examples 200a depicted in figure 4 (b).

In figure 8 (b), a force is applied to the left-hand side of the sensor unit 200a of figure 8 (a). The force pushes onto the surface of the deformable element 205 at the left-hand side of the sensor unit 200a in a direction *a*, which is perpendicular to the surface defined by the substrate 210. This force, which is indicated by the arrow, causes a compression of the deformable element 205. Due to the compression, the element 225a for reacting with the sensor 220 of the sensor unit 200a will also be pushed towards the substrate 210, thus reducing the distance between the element 225a and the sensor 220.

As a result of the displacement of the element 225a, the sensing elements 215 of the sensor 220 of the sensor unit 200a will experience a change in the registered signal. This is illustrated in figure 8 (c), showing a calculation 300a of the magnetic field affected by motion of a magnetic element, where the signal *S*(*a*) is indicative of the magnetic field strength registered by a sensing element 215 in dependency of the distance *a*. For the sake of explanation, it is assumed that sensing elements 215 each comprise two Hall elements, a first Hall element being sensitive in a direction perpendicular to the surface of the substrate 210 (i.e. direction *a*) and a direction being parallel to the surface of the substrate 210. Curve 305 may be illustrative of the magnetic field strength in a direction parallel to the surface of the substrate 210 as measured by the left sensing element 215 and curve 310 may be illustrative of the magnetic field strength in a direction perpendicular to the surface (i.e. direction *a*) of the substrate 210 as measured by the left sensing element 215. Furthermore, the right sensing element 215 may measure a substantially less strong signal, which in some embodiments may essentially be constant, as the right sensing element 215 mostly experiences the magnetic field generated by magnetic element 230a. This is illustrated by curve 315 in a dashed line, indicating a substantially constant signal. Depending on the elasticity of the deformable element 205, the force applied to the side of element 225a may also cause a motion the element 230a, in which case the curve 315 will not be constant.

In order to obtain a compensated calculation 300b of the magnetic field strength, differences (i.e. gradients) of the values measured at both sensing elements 215 may be considered. These differences are depicted in figure 8 (d) and illustrated by line 330 for the direction parallel to the substrate 210 and by line 325 for the direction perpendicular to the substrate 210. For the embodiment example of sensor unit 200a, it is assumed that a motion of the element 225a may only have a small influence on element 230a and therefore the magnetic field measured by the right sensing element 215 is assumed to be essentially constant. Accordingly, the differences 330, 325 merely represent an offset adjusted plot of curves 305 and 310, respectively. In other examples, e.g. when the elasticity of the deformable element 205 causes a coupling of the motion of elements 225a and 230a, the magnetic field measured by the right sensing element may not be substantially constant and instead show variations, which then will result in substantial adjustments in the compensated calculation 300b.

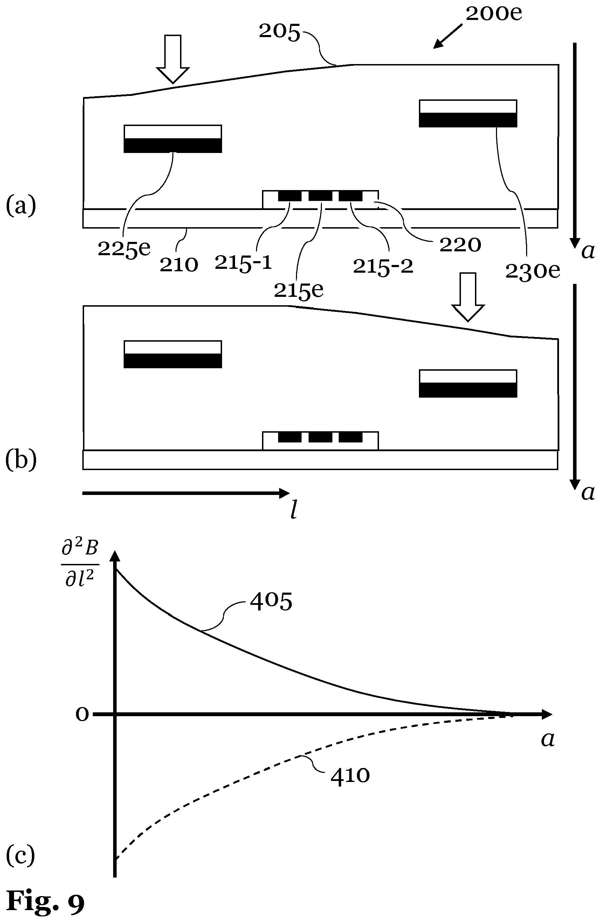

Figure 9 shows the application of the force to another sensor unit according to the invention, wherein (a) shows the side view of the sensor unit with an applied force in a first example, (b) shows the side view of the sensor unit with an applied force in a second example, and (c) shows the displacement of the magnets as calculated from the signal output of the sensor unit.

Figures 9 (a) and (b) show an embodiment example of a sensor unit 200e, which is similar to the embodiment examples of sensors units 200a, 200b, 200c, 200d depicted in figures 4 to 8, but with an additional sensing element 215e placed on the sensor 220 between sensing elements 215-1, 215-2. As is illustrated in figure 9, sensing elements 215 and additional sensing element 215e may be arranged in a line that extends from element 225e to element 230e (i.e. direction *l* as indicated in figure 9 (b)). The skilled person will be aware that the same or a similar result can be achieved by arranging multiple additional sensing elements on the sensor 220 that enable the calculation of so-called virtual sensing elements, or in other words multiple additional sensing elements may enable to calculate the magnetic field strength at a location where no sensing element is physically located. In a simple example, two additional sensing elements may be placed on a line that is perpendicular to the line formed by sensing elements 215, wherein a virtual additional sensing element at location 215e could then be reconstructed if both additional sensing elements have the same distance to the line between sensing elements 215-1, 215-2 and are located halfway between sensing elements 215-1, 215-2. In this case, the virtual additional sensing element at location 215e would be the average of the two additional sensing elements.

In figure 9 (a), a force is applied to the left-hand side of the deformable element 205, whereas in figure 9 (b), a force is applied to the right-hand side of the deformable element 205.

In figure 9 (c), a calculation of the magnetic field strength (single magnetic field component) is illustrated with curve 405 for the case depicted in figure 9 (a) and with curve 410 in dashed line for the case depicted in figure 9 (b). For the calculations, a second order gradient is used according to the following equation: $\left({B}_{left}-{B}_{center}\right) - \left({B}_{center}-{B}_{right}\right) \approx {∇}^{2} B \approx \frac{{\partial }^{2} B}{\partial {l}^{2}}$ with *B_{left}* being the magnetic field strength measured at sensing element 215-1, *B_{right}* being the magnetic field strength measured at sensing element 215-2, *B_{center}* being the magnetic field strength measured at the additional sensing element 215e, and *l* being the direction of the line along with the three sensing elements 215-1, 215-2, and 215e are located.

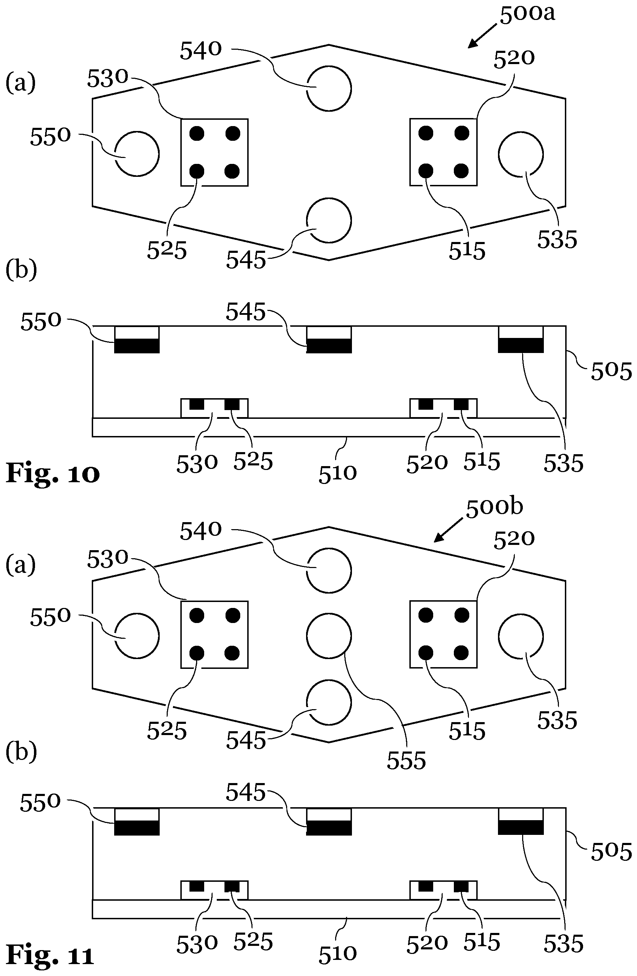

Figure 10 shows an embodiment example of another sensor unit according to the invention, wherein (a) shows a top view of the sensor unit and (b) a side view of the sensor unit.

In figure 10, the sensor unit is generally shown at 500a and comprises a substrate 510, a deformable element 505, two sensors 520, 530, each having four sensing elements 515, 525, and four elements 525, 540, 545, 550 for reacting with the sensors 520, 530. The substrate has a geometric shape, which allows for a plurality of sensor units 500a to be arranged in a regular lattice, thereby forming a two-dimensional structure that covers an area for force calculation with improved spatial resolution. For the embodiment example of sensor unit 500a, the geometry of the substrate may be referred to as elongated hexagonal shape. The person skilled in the art will appreciate that the substrate may also have other regular shapes, such as triangles, quadrilaterals, hexagons. In some embodiments, multiple different shapes may be used in order to cover a two-dimensional area, for example a combination of triangular and rectangular shapes.

The deformable element 505 may have a similar shape as the substrate 510 (e.g. in a top view as illustrated in figure 10 (a). However, the deformable element 505 may in some embodiments have different shapes, in particular, the deformable element may be smaller in size or may have differently shaped edge regions. These differently shaped edge regions may, for example, create gaps when multiple sensor units 500a are interconnected, thereby avoiding cross-talk of adjacent sensor units when a deformation of the deformable element of a first sensor unit propagates to the deformable elements of adjacent sensor units without the force actually being applied to the deformable elements of the adjacent sensor units.

The elements 535, 540, 545, 550 for reacting with the sensors 520, 530 are arranged in a geometrical manner, thereby forming a space between them, in which the sensors 520, 530 are located. In the embodiment example 500a depicted in figure 10, the elements 535, 540, 545, 550 for reacting with the sensors 520, 530 are arranged in the corners (or vertices) of a quadrilateral. In the example illustrated in figure 10, these locations may also be identified as the corners of a rhomb. In the connection line between elements 535 and 550, the two sensors 520, 530 are placed. Each sensor 520, 530 is a multipixel sensor having four sensing elements 515, 525.

While in figure 10 (b) the elements 535, 540, 545, 550 are leveled with surface of the deformable element 505, the elements 535, 540, 545, 550 may, in some embodiments, be fully embedded in the deformable element 505. In this case, the elements 535, 540, 545, 550 may be embedded in a similar manner as is illustrated in figures 4 to 9.

In figure 10 (b) it is indicated that elements 535, 540, 545, 550 for reacting with the sensors 520, 530 are two-pole magnetic elements, each having the same polarity. This type of magnetic element is used for illustrative purposes only in figures 10 to 17, but the skilled person will appreciate that other types of magnetic elements are also encompassed. Furthermore, in some embodiment examples, the elements 535, 540, 545, 550 for reacting with the sensors 520, 530 may have different polarities. For example, element pair 540, 545 may have the same polarity and element pair 535, 550 may have the same polarity, which is different from the polarity of element pair 540, 545. Or the elements of pair 540, 545 may have opposing polarity and elements of pair 535, 550 may have opposing polarity. Different combinations of polarities are possible and encompassed by the disclosure.

Figure 11 shows an embodiment example of another sensor unit according to the invention, wherein (a) shows a top view of the sensor unit and (b) a side view of the sensor unit.

The embodiment example 500b depicted in figure 11 is similar to the embodiment examples of sensor unit 500a depicted in figure 10. Compared to sensor unit 500a, sensor unit 500b comprises an additional element 555 for reacting with the two sensors 520, 530, which is placed in the center of the quadrilateral formed by elements 535, 540, 540, 545. Using an additional element 555 may increase the spatial resolution of the sensor unit or in other words improve the capability of the sensor unit to determine the location where a force was applied to the sensor unit.

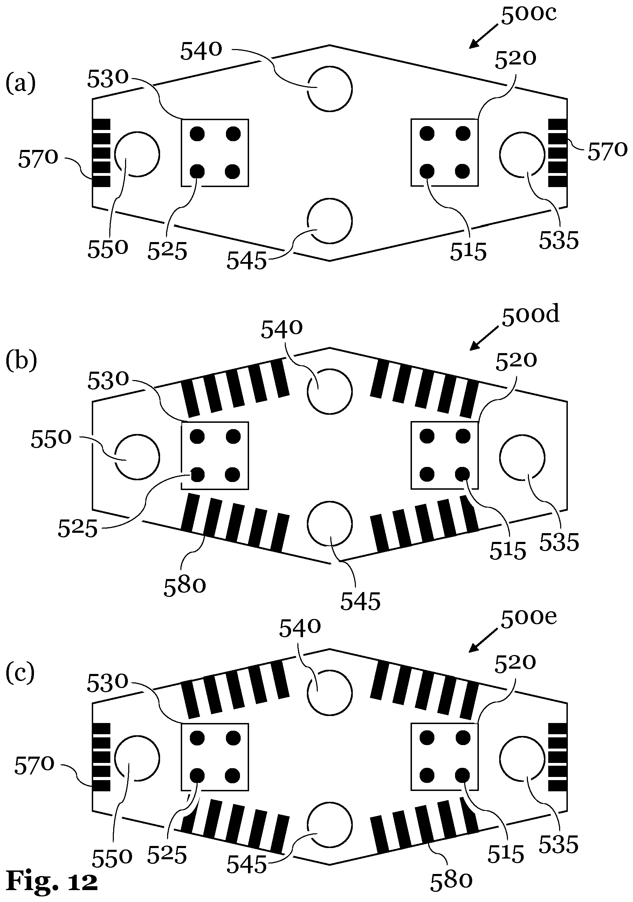

Figure 12 shows the embodiment example of the sensor unit of figure 10 with different examples of terminals.

The embodiment example 500c depicted in figure 12 (a) is similar to the embodiment example of sensor unit 500a depicted in figure 10. Compared to sensor unit 500a, terminals 570 for connecting sensor unit 500c to other sensor units of the same or similar type, a bus system, or a controller are illustrated.

The embodiment example 500d depicted in figure 12 (b) is similar to the embodiment example of sensor unit 500c depicted in figure 10 but comprises terminals 580 at different locations on the substrate.

The embodiment 500e depicted in figure 12 (c) is similar to the embodiment examples of sensor units 500c, 500d depicted in figures 12 (a), (b) and combines terminals 570 with terminals 580. Terminals 570 may, for example, be referred to as face connections or face terminals, whereas terminals 580 may, for example, be referred to as side connections or side terminals.

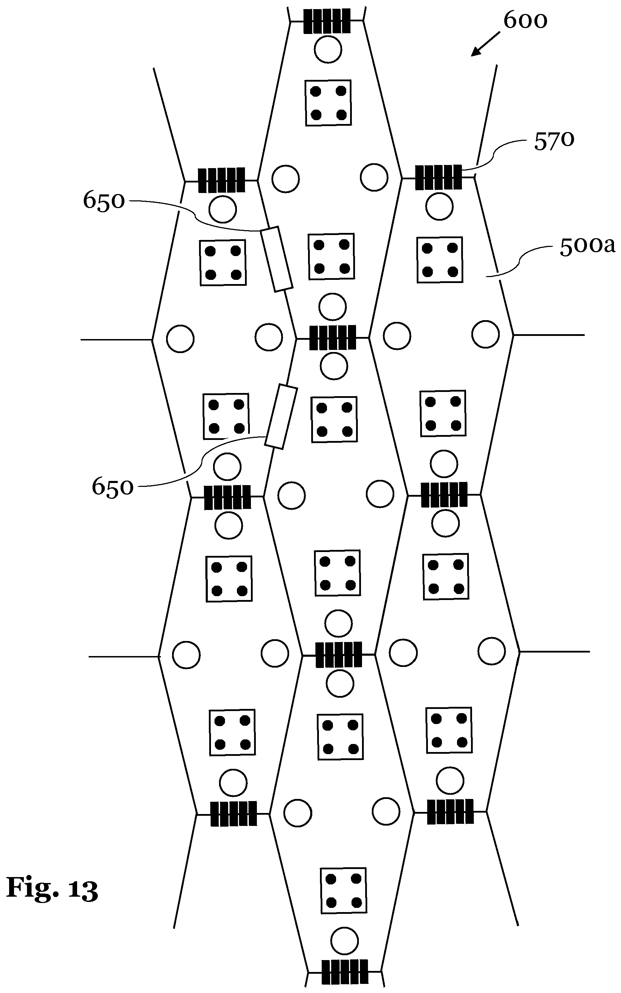

Figure 13 shows a system having a plurality of sensor units being interconnected in a spatial arrangement, wherein the sensor units of the plurality of sensor units correspond to the embodiment example illustrated in Figure 12 (a).

Figure 13 depicts a plurality 600 of sensor units 500a being arranged in a hexagonal lattice. Adjacent sensor units 500a are interconnected via their terminals 570. Since the embodiment example of sensor unit 500a comprises two terminals 570 at two opposing sides (i.e. faces) of its six sides of the substrates, lines of sensor units 500a are formed which are interconnected by their terminals 570. Adjacent lines may be interconnected by mechanical connections 650 to improve stability of the lattice. In other words, the sensor units 500a of the plurality 600 of sensor units are connected via their respective face terminals 570.

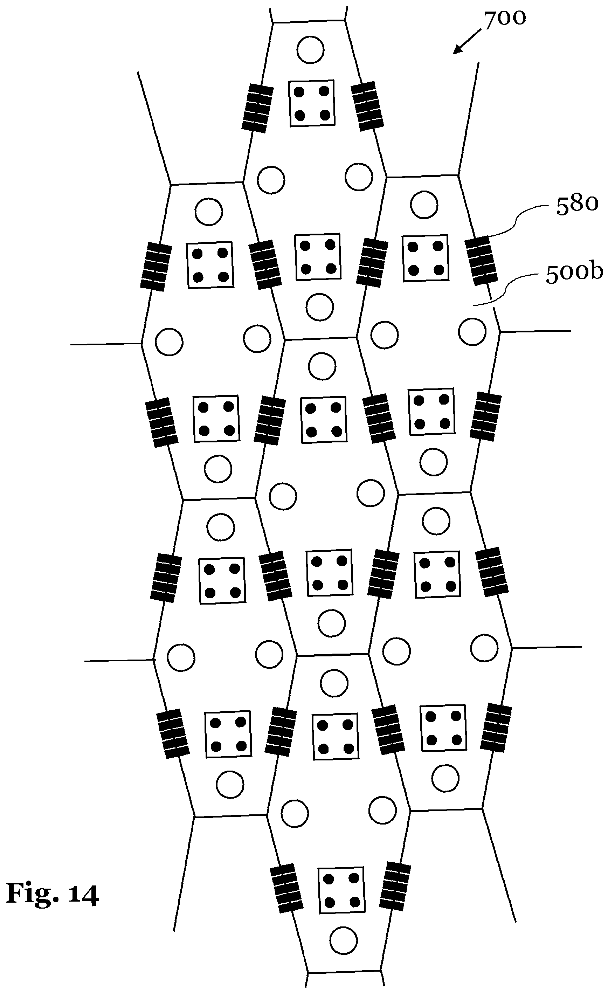

Figure 14 shows a system having a plurality of sensor units being interconnected in a spatial arrangement, wherein the sensor units of the plurality of sensor units correspond to the embodiment example illustrated in Figure 12 (b).

Figure 14 depicts a plurality 700 of sensor units 500b being arranged in a hexagonal lattice. Adjacent sensor units 500b are interconnected via their terminals 580. Compared to the embodiment example of sensor units 500a illustrated in figure 13, the sensor units 500b comprise four terminals 580 for connecting each sensor unit 500b to four adjacent sensor units 500b. In this case, no mechanical connectors are necessary since the parallel lines that are illustrated in figure 13 are already interconnected by the terminals 580 in case of figure 14. In other words, the sensor units 500b of the plurality 700 of sensor units are connected via their respective side terminals 580.

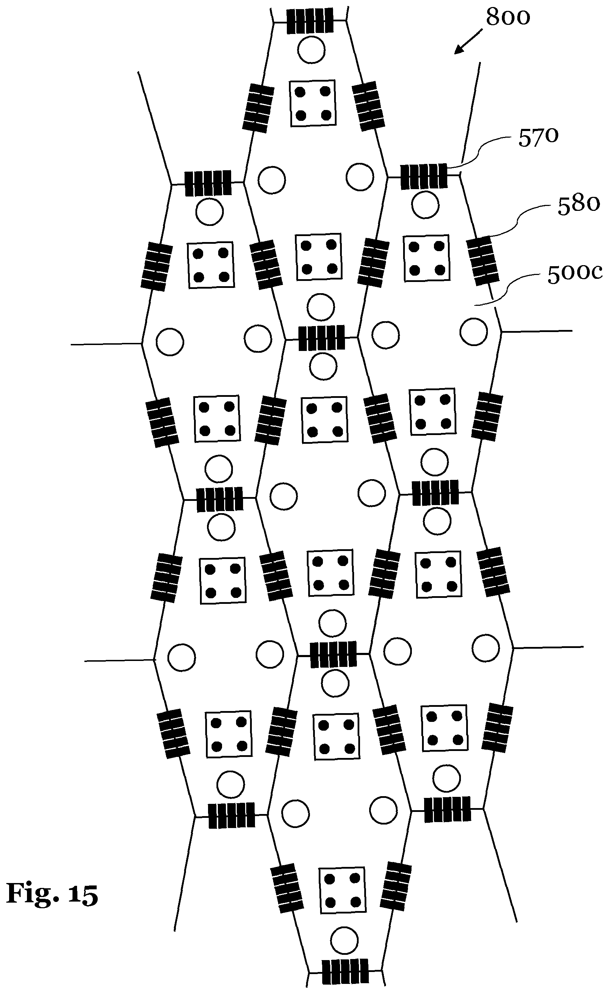

Figure 15 shows a system having a plurality of sensor units being interconnected in a spatial arrangement, wherein the sensor units of the plurality of sensor units correspond to the embodiment example illustrated in Figure 12 (c).

Figure 15 depicts a plurality 800 of sensor units 500c being arranged in a hexagonal lattice. Adjacent sensor units 500c are interconnected via their terminals 570, 580, thereby combining the electrical connections illustrated in figures 13 and 14. In other words, the sensor units 500c of the plurality 800 of sensor units are connected via their respective face terminals 570 and side terminals 580.

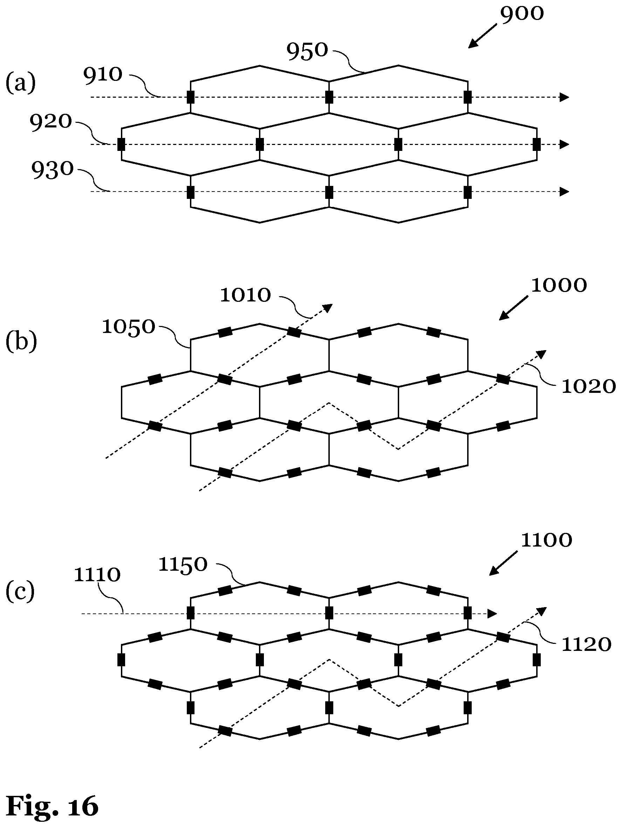

Figure 16 shows exemplary signal paths through the systems of sensor units illustrated in Figure 15, wherein (a) shows exemplary signal paths through the system of Figure 13, (b) shows exemplary signal paths through the system of Figure 14, (c) shows exemplary signal paths through the system of Figure 15.

In figure 16 (a), a hexagonal lattice 900 formed by a plurality of sensor units 950 similar to the plurality 600 of sensor units 500a is shown. Signal paths 910, 920, 930 are formed between adjacent sensor units 950. Due to the connections of each sensor unit 950 being connected to two adjacent sensor units 950 in a manner similar to what is shown in figure 13, signals paths 910, 920, 930 do not cross one another.

In figure 16 (b), a hexagonal lattice 1000 formed by a plurality of sensor units 1050 similar to the plurality 700 of sensor units 500b is shown. Signal paths are formed between adjacent sensor units 1050, wherein figure 16 (b) illustrates two examples of signal paths 1010, 1020. However, several interconnected signal paths may be formed. Furthermore, in some embodiments, the sensor units 1050 may be interconnected via their terminals by a common bus line, thus allowing arbitrary signals paths to be formed between the individual sensor units 1050, whereas in other embodiments, subgroups of sensor units 1050 may be connected to dedicated bus lines.

In figure 16 (c), a hexagonal lattice 1100 formed by a plurality of sensor units 1150 similar to the plurality 800 of sensor units 500c is shown. Signal paths are formed between adjacent sensor units 1150, wherein figure 16 (c) illustrates two examples of signal paths 1110, 1120. However, several interconnected signal paths may be formed. Furthermore, in some embodiments, the sensor units 1150 may be interconnected via their terminals by a common bus line, thus allowing arbitrary signals paths to be formed between the individual sensor units 1150, whereas in other embodiments, subgroups of sensor units 1150 may be connected to dedicated bus lines.

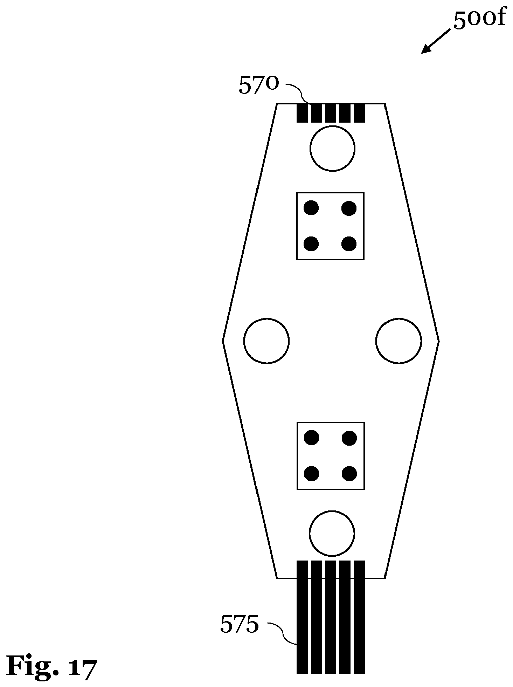

Figure 17 shows the embodiment example of Figure 12 (a) with a terminal 575 configured for connection with an outside component. The outside component may be a controller or a bus system, e.g. a bus system of a robotic gripper.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the scope of the appended claims.

## Claims

1. A sensor unit for measuring a force, comprising:
a substrate (210, 510);
at least one sensor (220, 520, 530) being arranged on the substrate (210, 510);
a deformable element (205, 505) connected to the substrate (210, 510),
wherein the deformable element (205, 505) is deformable by a force;
at least two elements (225a-e, 230a-e, 535, 540, 545, 550) for reacting with the at least one sensor (220, 520, 530) for measuring the force by a deformation of the deformable element (205, 505), wherein the deformable element (205, 505) extends at least partially between the at least one sensor (220, 520, 530) and the at least two elements (225a-e, 230a-e, 535, 540, 545, 550),
wherein a respective position of each of the at least two elements (225a-e, 230a-e, 535, 540, 545, 550) for reacting with the at least one sensor (220, 520, 530) does not overlap, in a direction perpendicular to the substrate (210, 510), with a respective position of each of the at least one sensor (220, 520, 530) on the substrate (210, 510).

2. The sensor unit according to claim 1, wherein the at least two elements (225a-e, 230a-e, 535, 540, 545, 550) for reacting with the at least one sensor (220, 520, 530) for measuring a force are embedded into the deformable element (205, 505).

3. The sensor unit according to any of the preceding claims, wherein the at least two elements (225a-e, 230a-e, 535, 540, 545, 550) for reacting with the at least one sensor (220, 520, 530) for measuring a force are magnetic elements (225a-e, 230a-e, 535, 540, 545, 550).

4. The sensor unit according to claim 3, wherein the at least two magnetic elements (225a-e, 230a-e, 535, 540, 545, 550) have the same polarities, or wherein at least one magnetic element of the at least two magnetic elements (225a-e, 230a-e, 535, 540, 545, 550) has a different polarity than at least one other magnetic element of the at least two magnetic elements (225a-e, 230a-e, 535, 540, 545, 550).

5. The sensor unit according to any of claims 3 and 4, wherein the magnetic elements (225a-e, 230a-e, 535, 540, 545, 550) are formed by magnetic powder, and
wherein one of:
the magnetic powder is embedded in the deformable element (205, 505), or
the magnetic powder is embedded in a matrix material and the deformable element (205, 505) comprises voids in which the matrix material with embedded magnetic powder is located.

6. The sensor unit according to any of the preceding claims, wherein the at least one sensor (220, 520, 530) comprises two or more sensing elements (215, 515, 525) arranged in a line, wherein the line preferably extends between two of the at least two elements (225a-e, 230a-e, 535, 540, 545, 550) for reacting with the sensor (220, 520, 530).

7. The sensor unit according to any of claims 1 to 5, wherein the at least one sensor (220, 520, 530) are at least two sensors (520, 530), wherein each of the at least two sensors (520, 530) comprises three or more sensing elements (515, 525) that are spaced apart.

8. The sensor unit according to any of the preceding claims, wherein the at least two elements (225a-e, 230a-e, 535, 540, 545, 550) for reacting with the at least one sensor (220, 520, 530) are spaced apart from one another and form a space between them and wherein the at least one sensor (220, 520, 530) is arranged in the space formed by the at least two elements (225a-e, 230a-e, 535, 540, 545, 550) for reacting with the at least one sensor (220, 520, 530).

9. The sensor unit according to claim 8, further comprising an additional element for reacting with the at least one sensor (220, 520, 530), which is located within the space formed between the at least two elements (225a-e, 230a-e, 535, 540, 545, 550) for reacting with the at least one sensor (220, 520, 530).

10. The sensor unit according to any of the preceding claims, wherein the substrate (210, 510) is flexible.

11. The sensor unit according to any of the preceding claims, wherein the substrate (210, 510) comprises at least one terminal (570, 575, 580), the at least one terminal (570, 575, 580) being configured for being connected to at least one of another sensor unit, a bus system, or a controller.

12. A system comprising:
a plurality of sensor units according to claim 11, wherein the sensor units of the plurality of sensor units are interconnected.

13. The system according to claim 12, wherein the substrate (210, 510) of each of the sensor units of the plurality of sensor units has a rectangular shape and wherein the at least one terminal (570, 575, 580) of the substrate (210, 510) are at least two terminals (570, 575, 580), at least one first terminal (570, 575, 580) of said terminals (570, 575, 580) being located at a first edge of the rectangular shaped substrate and at least one second terminal (570, 575, 580) of said terminals (570, 575, 580) being located at a second edge of the rectangular shaped substrate, and
wherein the plurality of sensor units is arranged in a rectangular lattice; and wherein each sensor unit of the plurality of sensor units is interconnected with at least one adjacent sensor unit of the plurality of sensor units via their first or second terminals (570, 575, 580).

14. The system according to claim 12, wherein the substrate (210, 510) of each of the sensor units of the plurality of sensor units has a hexagonal shape and wherein the at least one terminal (570, 575, 580) of the substrate (210, 510) are at least two terminals (570, 575, 580), at least one first terminal (570, 575, 580) of said terminals (570, 575, 580) being located at a first edge of the hexagonal shaped substrate and at least one second terminal (570, 575, 580) of said terminals (570, 575, 580) being located at a second edge of the hexagonal shaped substrate; and
wherein the plurality of sensor units is arranged in a hexagonal lattice; wherein each sensor unit of the plurality of sensor units is interconnected with at least one adjacent sensor unit of the plurality of sensor units via their first or second terminals (570, 575, 580).

15. The system according to any of claims 12 to 14, wherein at least one of the terminals (580) of at least one sensor unit of the plurality of sensor units is configured to be connected to a controller.
